# EUROPÄISCHE PATENTSCHRIFT

(11) **EP 1 310 713 B1**
(45) Veröffentlichungstag und Bekanntmachung des Hinweises auf die Patenterteilung: **28.09.2011**
(21) Anmeldenummer: 02450237.9
(22) Anmeldetag: 16.10.2002
(51) Int. Cl.: F16K 15/10

(54) **Dichtelemente für Kompressorventile**
Sealing elements for compressor valves
Eléments d'étanchéité pour soupape de compresseur

(30) Priorität: 07.11.2001 AT 17532001
(43) Veröffentlichungstag der Anmeldung: 14.05.2003
(73) Patentinhaber: Hoerbiger Kompressortechnik Holding GmbH, 1220 Wien (AT)
(72) Erfinder: Spiegl, Bernhard, 1030 Wien (AT); Artner, Dietmar, 7400 Oberwart (AT)
(74) Vertreter: Pinter, Rudolf

(56) Entgegenhaltungen:
- EP-A- 0 933 566
- EP-A- 1 221 554
- EP-A2- 0 378 008
- DE-A- 3 809 837
- GB-A- 1 025 713
- US-A- 3 671 048
- US-A- 5 192 200

## Beschreibung

Die Erfindung betrifft ein selbsttätiges Kompressorventil mit zumindest einem Dichtelement, insbesonders Dichtplatte, Dichtring und Dichtlamelle, bestehend aus Kunststoff mit eingelagerter Faserverstärkung.

Die Erfindung betrifft auch die Verwendung eines Elements als Dichtelement in einem selbsttätigen Kompressorventil.

Faserverstärkte Kunststoffe werden schon seit einigen Jahren als Werkstoffe für Dichtelemente der genannten Art eingesetzt. Siehe dazu beispielsweise die gattungsbildende EP 40 930 A1, EP 933 566 A1 oder US 3 536 094 A. Grundsätzlich kann dabei zwischen zwei verschiedenen Arten der Faserverstärkung unterschieden werden: Einerseits werden sogenannte kurzfaserverstärkte Kunststoffe und andererseits sogenannte langfaserverstärkte Kunststoffe verwendet. Die kurzfaserverstärkten Kunststoffe werden hauptsächlich im Spritzgussprozess verarbeitet und weisen bedingt durch diese Art der Verarbeitung eine sehr geringe Faserlänge von ca. 0,1 bis 0,3 mm auf. Auch bei Verwendung von Sondergranulaten mit wesentlich höherer Ausgangsfaserlänge von bis zu 20 mm führen unvermeidliche Faserbrüche während der Spritzgussverarbeitung zu keiner signifikanten Steigerung der mittleren Faserlänge in den hergestellten Elementen. Durch die geringe Faserlänge ist der Beitrag der Fasern zur Festigkeitssteigerung und zur Erhöhung der Steifigkeit verhältnismäßig gering, wobei sich bei hohen Einsatztemperaturen die Verstärkungswirkung dieser Kurzfasern noch weiter reduziert. Die Enden jeder Faser stellen im umgebenden Kunststoff potentielle Fehlerquellen dar, da dort Risswachstum entsteht oder begünstigt werden kann. Um eine sinnvolle Steifigkeit des fertigen Elementes erzielen zu können, müssen hohe Faservolumenanteile realisiert werden, die aber wiederum das gewünschte Dämpfungsverhalten des Elementes reduzieren und auch den Faserlängenabbau während der Verarbeitung begünstigen. Außerdem stellt sich bei kurzfaserverstärkten Thermoplasten bei der Spritzgussverarbeitung strömungsbedingt eine gewisse Schichtverteilung ein, die für hohe Eigenspannungen im fertigen Element und für Verzugsprobleme verantwortlich gemacht wird.

Die andererseits verwendeten Langfaserprodukte enthalten zumeist Faserverstärkungen in Form von Bündeln (im Bereich von 500 bis 50.000 quasi endlosen Fasern, sogenannten Rovings), welche in Form von verwebten Strukturen zur Verstärkung von thermoplastischen oder duroplastischen Kunststoffen verwendet werden. Darüber hinaus werden auch Schichten mit einheitlich ausgerichteten Langfasern, sogenannte Unidirektionalschichten, verwendet. Diese Produkte zeichnen sich durch eine sehr hohe Steifigkeit und Festigkeit in den Faserrichtungen aus, wobei aufgrund einer höheren Faserpackung in den Geweben auch ein größerer Faservolumenanteil realisiert werden kann. Allerdings können derartige langfaserverstärkte Kunststoffe nicht im Spritzgussverfahren verarbeitet werden. Zur Herstellung beispielsweise von Ventilplattenrohlingen oder von Halbzeugplatten, aus denen Dichtplatten, Dichtringe oder Dichtlamellen dann mechanisch herausgearbeitet werden, kommen Pressverfahren zur Anwendung, wobei meist vorimprägnierte Gewebematten aus Rovingen, sogenannte Prepregs, unter Druck und erhöhter Temperatur verpresst werden. Das Problem dieser langfaserverstärkten Werkstoffe liegt darin, dass die Roving-Stränge speziell mit hochviskosen Thermoplasten kaum imprägniert werden können und dass die sehr dichten Faserstränge damit an ihrer Oberfläche Grenzflächen erzeugen, die bei einer Schlagbeanspruchung normal zur Oberfläche zu Delaminationen neigen.

Aus den beschriebenen Gründen haben bis heute sowohl kurz- als auch langfaserverstärkte Kunststoffe für Dichtelemente der eingangs genannten Art nur im Zusammenhang mit eher gering beanspruchten Ring- bzw. Plattenventilen nennenswerte Verbreitung gefunden.

Aufgabe der vorliegenden Erfindung ist es, die beschriebenen Nachteile der bekannten Dichtelemente der eingangs genannten Art zu vermeiden und insbesonders derartige Dichtelemente so zu verbessern, dass auch unter den bei der Verwendung in selbsttätigen Kompressorventilen auftretenden ungünstigen hochdynamischen Beanspruchungen die Lebensdauer der Dichtelemente signifikant erhöht wird.

Diese Aufgabe wird gemäß der vorliegenden Erfindung bei selbsttätigen Kompressorventilen mit Dichtelementen der eingangs genannten Art dadurch gelöst, dass die Faserverstärkung aus zumindest einem im wesentlichen flächigen, nicht verwobenen Faservlies (Wirrfasermatte) mit in der Fläche zumindest weitgehend richtungsunabhängiger Faserorientierung besteht. Derartige Wirrfasermatten (im englischen treffend als "non-woven fibre fabrics" bezeichnet) werden aus Einzelfasern, vorzugsweise mit Längen zumindest größtenteils größer 2mm, besonders bevorzugt zumindest größtenteils größer 4 mm, mit oder auch ohne Zuhilfenahme von chemischen oder physikalischen Bindemitteln hergestellt. Die Einzelfasern sind in der Ebene wahllos orientiert oder weisen allenfalls herstellungsbedingt eine geringe Vorzugsorientierung auf. Die Dichtelemente bzw. die Rohlinge oder Halbzeugplatten können im Pressverfahren hergestellt werden, wobei es an sich keine Einschränkungen bezüglich der Faserlänge gibt. Durch den möglichen symmetrischen und gleichmäßigen Aufbau wird die Entstehung von Eigenspannungen und das Auftreten von Verzug unterbunden. Die große Faserlänge der Einzelfasern erzeugt eine hohe Verstärkungswirkung, wodurch die geforderte Steifigkeit bereits mit geringen Faseranteilen realisiert werden kann. Der mittlere Faservolumenanteil im fertigen Dichtelement liegt in besonders bevorzugter Ausgestaltung der Erfindung im Bereich von 5 bis 30 %, besonders bevorzugt im Bereich von 10 bis 20 %. Damit werden die günstigen Dämpfungseigenschaften des Verbundes in Dickenrichtung kaum beeinflusst. Der geringere Modul in Dickenrichtung begünstigt gleichzeitig eine hohe Dichtheit und ein rasches Eindichten in der Anwendung.

Die gleichmäßige Verteilung der Einzelfasern in den Wirrfasermatten verhindert Delaminationen an den Grenzflächen und ermöglicht beispielsweise auch im Falle von sehr hochviskosen Polymerschmelzen eine einfache Imprägnierung.

Das Faservlies besteht in weiters bevorzugter Ausgestaltung der Erfindung aus Glas, Aramid-, Stahl-, Keramik- oder Kohlefaser, bzw. einer Mischung dieser, vorzugsweise aus Kohlefaser, und der umgebende Kunststoff aus duro- oder thermoplastischem Kunststoff, insbesonders Epoxidharz, Bismaleinimidharz, Polyurethanharz, Silikonharz, PEEK, PA, PPA, PTFE, PFA, PPS, PBT, PET, PI oder PAI, vorzugsweise aus PEEK, PA, PFA, oder PPS. Grundsätzlich können alle der als Beispiel genannten Faserwerkstoffe zusammen mit allen der als Beispiel genannten Kunststoffe bei einfachsten Herstellungsbedingungen gemeinsam verwendet werden, da unter Umständen bestehende Unterschiede im Haftverhalten der einzelnen Werkstoffe zueinander zufolge der großen Faserlängen keine negativen Einflüsse auf den Gesamtverbund haben können. Während einzelne Faserwerkstoff/Kunststoff-Kombinationen zufolge schlechter gegenseitiger Haftung beispielsweise nicht für die Spritzgussverarbeitung mit Kurzfaserverstärkungen geeignet sind, sind bei den hier verwendeten Faserlängen diesbezüglich keinerlei Probleme zu erwarten.

Die Verarbeitung kann beispielsweise durch kontinuierliches Pressen auf einer Doppelbandpresse oder durch diskontinuierliches Pressen mit einzelnen Pressmatrizen erfolgen. Im Falle einer thermoplastischen Matrix wird Schmelze oder Pulver auf die Gewebe aufgebracht und anschließend beides gemeinsam verpresst oder es werden entsprechende Kunststofffolien mit Dicken im Bereich von 0,02 mm bis 2 mm gemeinsam mit Wirrfaservliesen gestapelt und unter Druck und erhöhter Temperatur verpresst. Bei duroplastischen Harzsystemen kann das Harz auf die Faservliese aufgebracht und unter Temperatur und Druck ausgehärtet werden.

In besonders bevorzugter weiterer Ausgestaltung der Erfindung ist vorgesehen, dass die Faservliesverstärkung und/oder der umgebende Kunststoff im fertigen Dichtelement unter Berücksichtigung lokal unterschiedlicher Anforderungen in inhomogener Verteilung und/oder mit lokal unterschiedlichen Materialeigenschaften vorliegt. Damit kann auf vielfältigste Weise auf die speziellen Anforderungen des jeweiligen Dichtelementes eingegangen werden und zwar sowohl im Hinblick auf Steifigkeit, Dämpfung oder Schlagzähigkeit, als auch auf verschiedenste andere Anforderungen. Die Inhomogenitäten bezüglich der Verteilung und/oder der unterschiedlichen Materialeigenschaften können dabei sowohl über die Dicke des Dichtelementes als auch beispielsweise in radialer Richtung variieren. Damit können verschiedenste Einflussnahmen auf die speziellen lokalen Eigenschaften des Dichtelementes genommen werden.

Die inhomogene Verteilung ist in bevorzugter Ausgestaltung der Erfindung durch die Größe und/oder Form und/oder das Material und/oder die räumliche Anordnung bzw. Verteilung eines oder mehrer Faservliese bedingt, was auf einfache Weise die oben angesprochenen lokalen Einflussnahmen auf die Materialeigenschaften des Dichtelementes ermöglicht.

Die den Sitz- und/oder Anschlagflächen der fertigen Dichtelemente zugewandten oberflächennahen Bereiche sind nach einer anderen vorteilhaften Ausgestaltung der Erfindung vorzugsweise bis zu mindestens einer dem zwei- bis drei-fachen des Faserdurchmessers entsprechenden Tiefe frei von Faserverstärkung. Damit kann im Zusammenhang mit der Verwendung der Dichtelemente in selbsttätigen Kompressorventilen beispielsweise eine Rissentstehung nach oberflächennahen Faserbrüchen in der Nähe von Sitzleistenkanten vermieden und gleichzeitig das tribologische Verhalten verbessert werden.

Die faserfreien oberflächennahen Bereiche bestehen in weiters bevorzugter Ausgestaltung der Erfindung aus gegenüber dem sonstigen Dichtelement unterschiedlichen Werkstoffen, vorzugsweise mit höherer Zähigkeit und/oder höherer Dämpfung und/oder höherer Ermüdungsrissbeständigkeit. Die damit entstehenden funktionalen Deckschichten sorgen für eine Reduktion von Spannungsspitzen im unmittelbaren Sitzbereich durch zusätzliche Dämpfung des Aufpralls, wodurch die Entstehung von Rissen in diesen Zonen verhindert wird. Die mikroskopische Betrachtung von ohne derartige funktionale Deckschichten ausgeführten Dichtelementen zeigt oft, dass die an der Oberfläche oder knapp darunter liegenden Fasern die starken Deformationen im Bereich beispielsweise der Sitzleisten beim Aufprall nicht mitmachen und brechen, wobei das Zusammenwachsen und Vereinen von mikroskopischen Rissen dann zur Bildung eines makroskopischen Risses und zum Versagen des Dichtelementes führt. Weiters wird durch die faserfreien funktionellen Deckschichten auch das Anhaften von Schmutzpartikeln und dergleichen verhindert.

Nachdem durch diese faserfreien Deckschichten, insbesonders bei deren Ausgestaltung mit Werkstoffen erhöhter Zähigkeit, das übliche mechanische Herausarbeiten der Form des fertigen Dichtelementes aus einer Halbzeugplatte durch Fräsen oder dergleichen unter Umständen behindert werden kann, hat sich speziell für diese Anwendungen das Schneiden mit einem Wasserstrahl unter hohem Druck als besonders vorteilhaft erwiesen.

In weiters bevorzugter Ausgestaltung der Erfindung kann vorgesehen sein, dass eine zwischen Sitz- und Anschlagefläche gelegene Mittelschicht relativ zu den angrenzenden Schichten geringere Faserverstärkung, vorzugsweise einen gegenüber den angrenzenden Bereichen verringerten Faservolumenanteil, aufweist. Damit kann ebenfalls das Eigenschaftsprofil des Werkstoffes bzw. des fertigen Dichtelementes den jeweiligen Anforderungen angepasst werden. Durch die Variation des Faservolumenanteils über die Dicke können die Steifigkeits- und Dämpfungseigenschaften optimiert werden, was über eine Änderung des Aufbaus bei der Pressverarbeitung einfach bewerkstelligt werden kann.

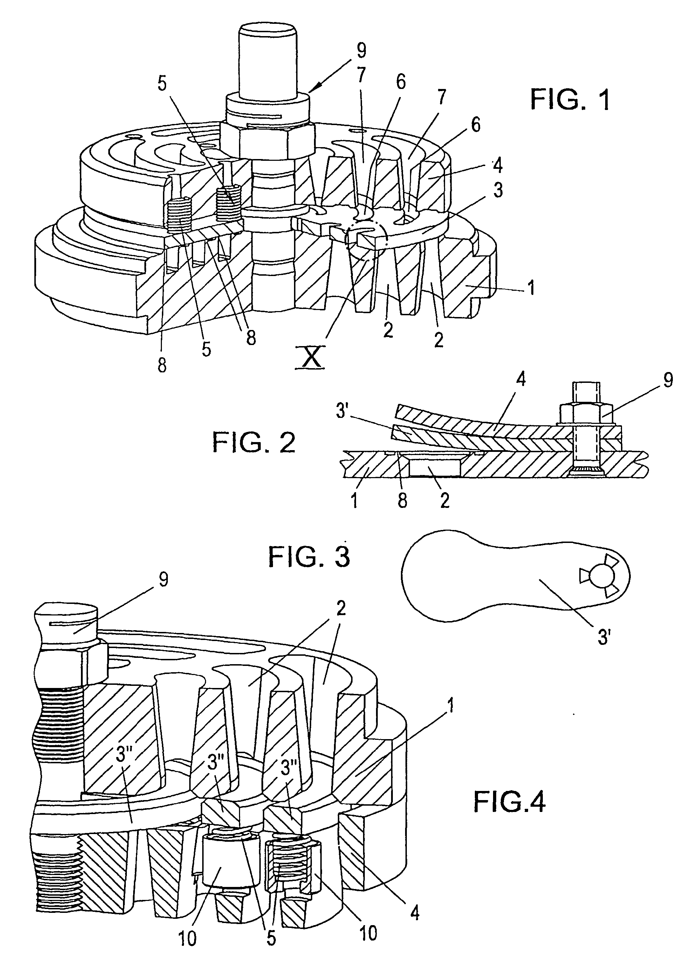

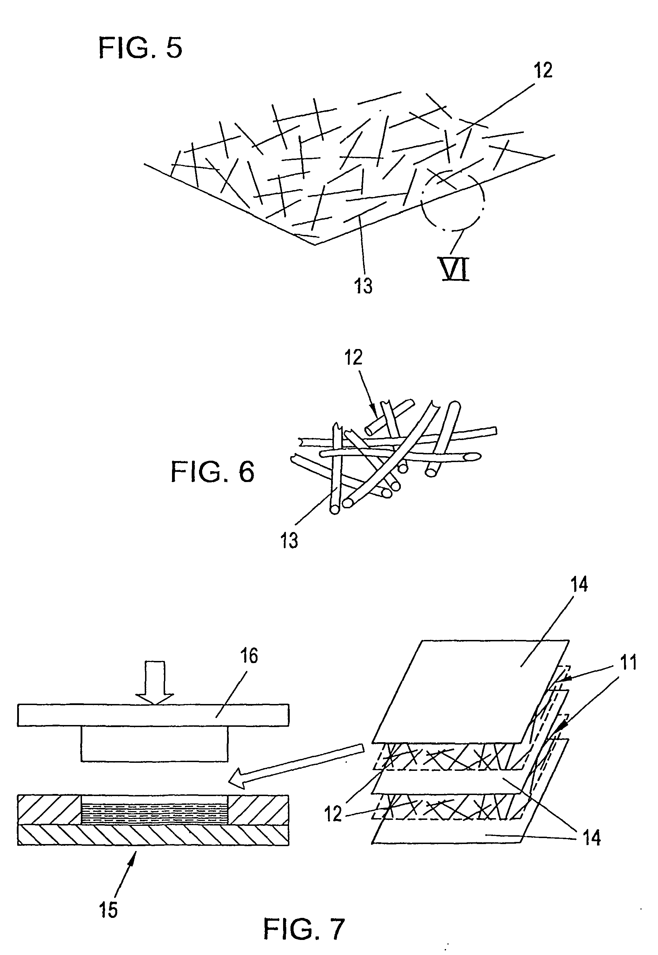

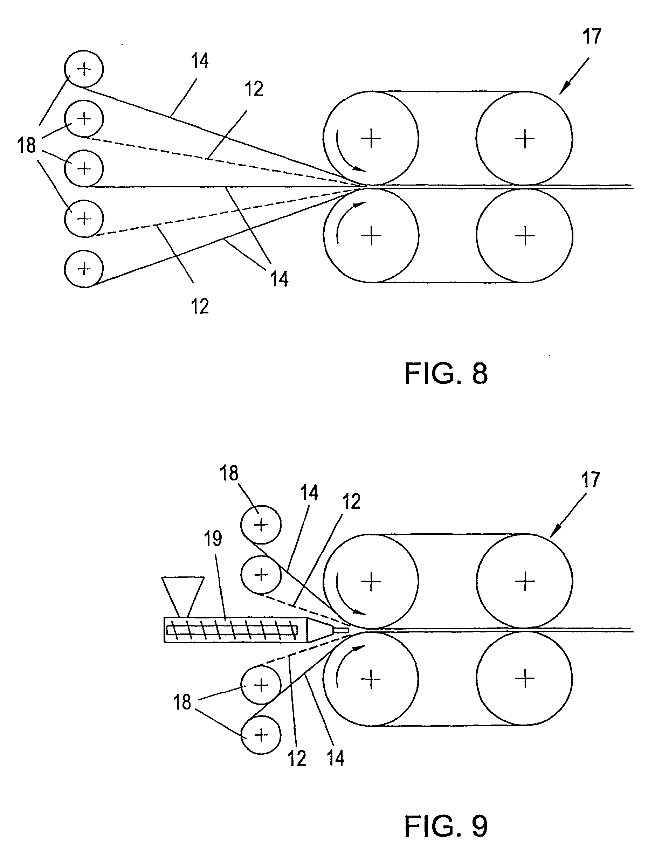

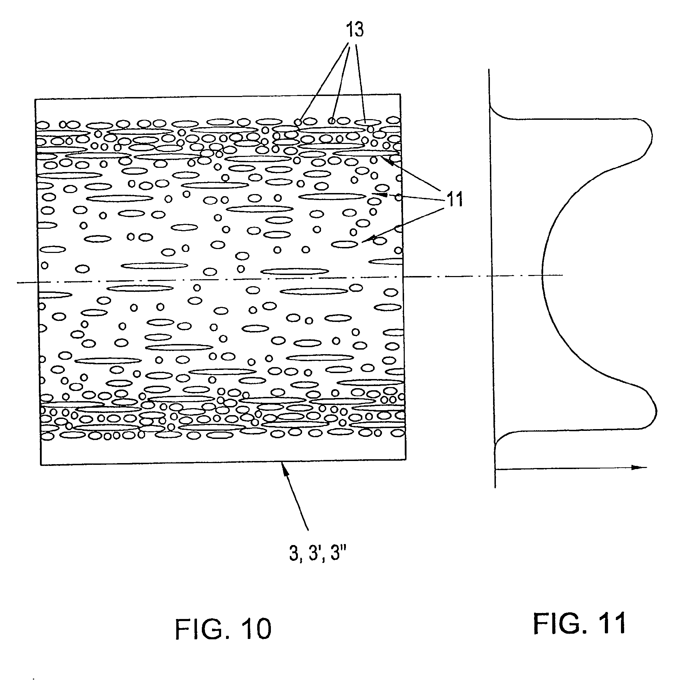

Die Erfindung wird im folgenden anhand der teilweise schematischen Zeichnungen näher erläutert. Es zeigen dabei: Fig. 1 eine perspektivische Ansicht eines teilweise geschnittenen Kompressorventils mit einer erfindungsgemäß ausgebildeten Dichtplatte, Fig. 2 einen teilweisen Schnitt durch ein Lamellenventil als Druckventil eines nicht weiter dargestellten Kompressors mit einer erfindungsgemäß ausgebildeten Dichtlamelle, Fig. 3 die Draufsicht auf die Dichtlamelle gemäß Fig. 2 von oben, Fig. 4 die perspektivische Ansicht eines teilweise aufgeschnittenen Kompressorventils mit einzelnen Dichtringen gemäß der vorliegenden Erfindung, Fig. 5 die schematische Darstellung eines Teils einer Wirrfasermatte zur Verwendung als Faserverstärkung in einem Dichtelement beispielsweise gemäß den Fig. 1 bis 4, Fig. 6 das vergrößerte Detail VI aus Fig. 5, Fig. 7 eine schematische Verarbeitungseinrichtung für diskontinuierliches Pressen mit einer einzelnen Pressmatrize zur Herstellung einer Halbzeugplatte für ein erfindungsgemäßes Dichtelement, Fig. 8 und 9 beispielsweise Verarbeitungseinrichtungen zur Herstellung von Halbzeugbändern für erfindungsgemäße Dichtelemente durch kontinuierliches Pressen auf Doppelbandpressen, Fig. 10 eine Vergrößerung des Querschnittes X in Fig. 1 und Fig. 11 ein die lokal bzw. schichtweise unterschiedliche Faserverstärkung im Querschnitt gemäß Fig. 10 symbolisierendes Diagramm.

Das selbsttätige Kompressorventil gemäß Fig. 1 besteht im wesentlichen aus einem Ventilsitz 1, dessen im wesentlichen ringförmig konzentrisch angeordnete Durchgangsöffnungen 2 von einer Dichtplatte 3 überdeckt sind, welche ihrerseits von einem Fänger 4 her mittels Spiralfedern 5 in Richtung Ventilsitz 1 belastet ist. Eine mittlere Schraube 9 hält die Komponenten zusammen; die Einbauumgebung ist nicht dargestellt. Nach Überschreiten einer durch die Federn 5 vorgebbaren Druckdifferenz öffnet die Dichtplatte 3 durch Abheben vom Ventilsitz 1 die Durchgangsöffnungen 2, womit Druckmedium über die konzentrischen Schlitze 6 in der Dichtplatte 3 und zugeordnete Abströmöffnungen 7 im Fänger 4 durchströmen kann.

Das Abheben der Dichtplatte 3 vom Ventilsitz 1 bzw. von dort herausgearbeiteten Dichtleisten 8, das Anschlagen auf der gegenüberliegenden Seite am Fänger 4 nach Überwindung eines durch die Bauweise des Ventils vorgegebenen Hubspaltes sowie das am Ende der Ventilöffnung wieder erfolgende Aufschlagen der Dichtplatte 3 am Ventilsitz 1 bzw. den Dichtleisten 8 erfolgt selbsttätig entsprechend der Hubbewegung des nicht dargestellten Kompressorkolbens und dem dadurch bedingten Mediumstrom dynamisch bis hochdynamisch, was entsprechend dynamische Belastungen der Dichtplatte 3 bedingt, die im Hinblick auf eine ausreichend hohe Lebensdauer aller beteiligten Komponenten besondere Anforderungen an Konstruktion und Werkstoffwahl stehlt.

Beim Lamellenventil nach Fig. 2 ist der Ventilsitz 1 nur mit einer kreisförmigen Durchgangsöffnung 2 versehen, deren Dichtleiste 8 mit einer im wesentlichen längserstreckten, einseitig mittels der Schraube 9 wiederum zusammen mit einem ebenfalls längserstreckten Fänger 4 am Ventilsitz 1 befestigten Dichtlamelle 3' zusammenwirkt. Die Dichtlamelle 3' ist hier nicht separat federbelastet und liegt im geschlossenen Zustand des Ventils gegebenenfalls unter innerer Vorspannung dicht am Ventilsitz auf - dargestellt in Fig. 2 ist eine bereits abgehobene Mittelstellung, bevor die Dichtlamelle 3' am Ende ihres möglichen Hubes vollständig am Fänger 4 anliegt. Abgesehen von der dargestellten Bauart mit einer einzigen, der Dichtlamelle 3 zugeordneten Durchgangsöffnung 2 könnten aber auch ohne weiteres mehrere benachbarte derartiger Durchgangsöffnungen von einer gemeinsamen Dichtlamelle 3' überdeckt bzw. gesteuert werden. Auch hier entsteht durch die dynamische bis hochdynamische auf und ab Bewegung eines nicht weiter dargestellten Kompressorkolbens eine dynamische Bewegung und Belastung der Dichtlamelle 3' speziell an ihrem der Durchgangsöffnung 2 zugewandten freien Ende - zusätzlich tritt im Bereich zwischen der Schraube 9 und dem freien Ende der Dichtlamelle 3' noch eine dynamische Biegebelastung auf, was damit eine von Fig. 1 etwas abweichende Gesamtbelastung des Dichtelementes ergibt.

Das Kompressorventil gemäß Fig. 4 ist in gewisser Weise wieder ähnlich zu dem gemäß Fig. 1 - auch hier sind ein mit konzentrischen Durchgangsöffnungen 2 versehener Ventilsitz 1 und ein entsprechender Fänger 4 mittels einer zentralen Schraube 9 zusammengespannt. Anstelle der einstückigen Dichtplatte 3 sind hier aber nun einzelne konzentrische Dichtringe 3" vorgesehen, die vom Fänger 4 her mittels in Hülsen 10 angeordneter Federn 5 separat belastet sind und damit auch unabhängig voneinander Bewegungen zwischen Ventilsitz 1 und Fänger 4 ausführen können. Die Bewegung und Belastung der Dichtringe 3" erfolgt wiederum abhängig von der periodischen Kolbenbewegung des nicht weiter dargestellten Kompressors bzw. den davon bedingten Druckverläufen dynamisch, wobei sich durch die einzelnen Dichtringe 3" aber wiederum von der Situation im Ventil gemäß Fig. 1 abweichende Belastungscharakteristiken ergeben.

Allen in den Fig. 1 bis 4 dargestellten Anwendungsbeispielen erfindungsgemäßer Dichtelemente ist die dynamische bis hochdynamische Belastung durch Oberflächenschläge beim Anschlagen auf den Dichtkanten bzw. am Fänger gemeinsam, die hinsichtlich der konstruktiven Ausbildung und Werkstoffauswahl bei der hier im Vordergrund stehenden Ausbildung der Dichtelemente aus Kunststoff mit eingelagerter Faserverstärkung in allen Fällen zu ähnlichen vorteilhaften Lösungen der zu berücksichtigenden Probleme führt.

Erfindungsgemäß besteht die Faserverstärkung 11 gemäß den Fig. 5 bis 11 aus zumindest einem im wesentlichen flächigen, nicht verwobenen Faservlies 12 (einer sogenannten Wirrfasermatte, bzw. auf englisch "non-woven fibre fabric") mit in der Fläche zumindest weitgehend richtungsunabhängiger Faserorientierung (siehe dazu insbesonders Fig. 5 und 6). Durch den damit möglichen symmetrischen und gleichmäßigen Aufbau wird die Entstehung von Eigenspannungen und das Auftreten von Verzug in den Dichtelementen unterbunden. Zufolge der großen Faserlänge von bevorzugt zumindest größtenteils größer 2 mm ergibt sich eine hohe Verstärkungswirkung, wodurch die geforderte Steifigkeit der Dichtelemente bereits mit geringen Faseranteilen (bevorzugte mittlere Faservolumenanteile im fertigen Dichtelement im Bereich von 5 bis 30 %) realisiert werden kann. Es ergeben sich damit weiters günstige Dämpfungseigenschaften des Dichtelementes in Dickenrichtung und zufolge eines geringeren Moduls in Dickenrichtung auch eine hohe Dichtheit und ein rasches Eindichten in der Anwendung. Die gleichmäßige bzw. richtungsunabhängige Verteilung der Einzelfasern 13 im Faservlies 12 verhindert Delaminationen an den Grenzflächen und ermöglicht beispielsweise auch im Falle von sehr hochviskosen Polymerschmelzen eine einfache Imprägnierung.

In Fig. 7 ist symbolisch die Herstellung einer Halbzeugplatte dargestellt, aus der dann beispielsweise durch Wasserstrahlschneiden (was auch bei relativ elastischen bzw. zähen Oberflächenschichten eine hervorragende Bearbeitungsqualität sicherstellt) Dichtelemente zur Verwendung in Anwendungen gemäß Fig. 1 bis 4 geschnitten werden können. Es werden abwechselnd Schichten von Kunststofffolien 14 und Faservlies 12 übereinandergelegt und in einer Pressmatrize 15 unter Erhitzung mittels eines Pressenstempels 16 verpresst. Über Anzahl, Dicke, Aufeinanderfolge, Werkstoffwahl u. dgl. der Schichten können so verschiedene Eigenschaften der Halbzeugplatte vorgegeben werden, womit das fertige Dichtelement genau auf den jeweiligen Anwendungsfall abgestellte Eigenschaften erhält. So kann beispielsweise durch dickere faserfreie Deckschichten und gegenüber dem sonstigen Dichtelementquerschnitt in der Mitte verringertem Faservolumenanteil ein Aufbau gemäß Fig. 10 und 11 erreicht werden, bei dem einerseits eine hervorragende Dämpfung des Dichtelementes bei ausreichender Steifigkeit sichergestellt ist und andererseits durch die Schlagbeanspruchungen an der Oberfläche keine oberflächennahen Faserbrüche mit folgendem Risswachstum auftreten können.

Gemäß Fig. 8 kann die Verarbeitung aber auch zu im wesentlichen bandförmigen Halbzeugen durch kontinuierliches Pressen auf einer Doppelbandpresse 17 erfolgen, wobei von Zuführrollen 18 aus abwechselnd Kunststofffolie 14 und Faservlies 12 zugeführt und im Bereich der Doppelbandpresse thermisch verpresst wird.

Gemäß Fig. 9 kann abweichend von Fig. 8 im Falle einer thermoplastischen Matrix Schmelze oder auch Pulver mit einer Zuführeinheit 19 zwischen die Faservliese 12 eingebracht und anschließend alles gemeinsam in der Doppelbandpresse 17 verpresst werden. Ähnliches gilt auch für duroplastische Harzsysteme, bei denen über die Zuführeinheit 19 Harz auf die Faservliese 13 aufgebracht und unter Temperatur und Druck aushärten gelassen wird.

## Patentansprüche

1. Selbsttätiges Kompressorventil mit zumindest einem hochdynamisch schlagbeanspruchten beweglichen Dichtelement, insbesonders Dichtplatte (3), Dichtring (3") und Dichtlamelle (3'), bestehend aus Kunststoff (14) mit eingelagerter Faserverstärkung (11), **dadurch gekennzeichnet, dass** die Faserverstärkung (11) aus zumindest einem im wesentlichen flächigen, nicht verwobenen Faservlies (12) mit in der Fläche zumindest weitgehend richtungsunabhängiger Faserorientierung besteht.

2. Kompressorventil nach Anspruch 1, **dadurch gekennzeichnet, dass** die Länge der Einzelfasern (13) im Faservlies (12) zumindest größtenteils größer 2 mm, vorzugsweise zumindest größtenteils größer 4 mm, ist.

3. Kompressorventil nach Anspruch 1 oder 2, **dadurch gekennzeichnet, dass** der mittlere Faservolumenanteil im fertigen Dichtelement (3, 3', 3") im Bereich von 5 - 30 %, bevorzugt 10 bis 20 %, liegt.

4. Kompressorventil nach einem oder mehreren der Ansprüche 1 bis 3, **dadurch gekennzeichnet, dass** das Faservlies (12) aus Glas-, Aramid-, Stahl-, Keramik- oder Kohlefaser, bzw. einer Mischung dieser, vorzugsweise aus Kohlefaser, und der umgebende Kunststoff (14) aus duro- oder thermoplastischem Kunststoff, insbesonders Epoxidharz, Bismaleinimidharz, Polyurethanharz, Silikonharz, PEEK, PA, PPA, PTFE, PFA, PPS, PBT, PET, PI oder PAI, vorzugsweise aus PEEK, PA, PFA oder PPS, besteht.

5. Kompressorventil nach einem oder mehreren der Ansprüche 1 bis 4, **dadurch gekennzeichnet, dass** die Faservliesverstärkung (11) und/oder der umgebende Kunststoff (14) im fertigen Dichtelement (3, 3', 3") unter Berücksichtigung lokal unterschiedlicher Anforderungen in inhomogener Verteilung und/oder mit lokal unterschiedlichen Materialeigenschaften vorliegt.

6. Kompressorventil nach Anspruch 5, **dadurch gekennzeichnet, dass** die inhomogene Verteilung durch die Größe und/oder Form und/oder das Material und/oder die räumliche Anordnung bzw. Verteilung eines oder mehrerer Faservliese (12) bedingt ist.

7. Kompressorventil nach Anspruch 5 oder 6, **dadurch gekennzeichnet, dass** die den Sitz- und/oder Anschlagflächen der fertigen Dichtelemente (3, 3', 3") zugewandten oberflächennahen Bereiche, vorzugsweise bis zu mindestens einer dem 2- bis 3-fachen des Faserdurchmessers entsprechenden Tiefe, frei von Faserverstärkung sind.

8. Kompressorventil nach Anspruch 7, **dadurch gekennzeichnet, dass** die faserfreien oberflächennahen Bereiche aus gegenüber dem sonstigen Dichtelement unterschiedlichen Werkstoffen, vorzugsweise mit höherer Zähigkeit und/oder höherer Dämpfung und/oder höherer Ermüdungsrissbeständigkeit, bestehen.

9. Kompressorventil nach einem oder mehreren der Ansprüche 5 bis 8, **dadurch gekennzeichnet, dass** eine zwischen Sitz- und Anschlagfläche gelegene Mittelschicht relativ zu den angrenzenden Schichten geringere Faserverstärkung, vorzugsweise einen gegenüber den angrenzenden Bereichen verringerten Faservolumenanteil, aufweist.

10. Verwendung eines Elementes aus Kunststoff mit eingelagerter Faserverstfärkung (11), welche aus einem in wesentlichen flächigen, nicht verwobenen Faservlies (12) mit in der Fläche zumindest weitgehend richtungsunabhängiger Faserorientierung besteht, als hochdynamisch schlagbeanspruchtes bewegliches Dichtelement eines selbsttätigen Kompressorventils.

## Claims

1. Automatic compressor valve with at least one highly dynamically impact stressed movable sealing element, particularly sealing plate (3), sealing ring (3"), and sealing lamella (3'), composed of plastic (14) with embedded fiber reinforcement (11), **characterized in that** the fiber reinforcement (11) is composed of at least one essentially flat, non-woven fiber fabric (12), which has in the surface an at least largely directionally independent fiber orientation.

2. Compressor valve according to claim 1, **characterized in that** the length of the individual fibers (13) in the fiber fabric (12) is at least largely more than 2 mm, preferably at least largely more than 4 mm.

3. Compressor valve according to claim 1 or 2, **characterized in that** the average proportion of fiber volume in the finished sealing element (3, 3', 3") lies in the range of 5 - 30%, preferably 10 to 20%.

4. Compressor valve according to one or more of claims 1 through 3, **characterized in that** the fiber fabric (12) is composed of glass fibers, aramide fibers, steel fibers, ceramic fibers or carbon fibers, or a mixture thereof, and the surrounding plastic (14) is composed of thermosetting or thermoplastic material, particularly epoxy resin, bismaleimide resin, polyurethane resin, silicone resin, PEEK, PA, PPA, PTFE, PFA, PPS, PBT, PET, PI or PAI, preferably of PEEK, PA, PFA or PPS.

5. Compressor valve according to one or more of claims 1 through 4, **characterized in that** the fiber fabric reinforcement (11) and/or the surrounding plastic (14) in the finished sealing element (3, 3', 3") has an inhomogeneous distribution and/or has locally different material properties under consideration of locally different requirements.

6. Compressor valve according to claim 5, **characterized in that** the inhomogeneous distribution is determined by the size and/or the shape and/or the material and/or the spatial arrangement or distribution of one or more fiber fabrics (12).

7. Compressor valve according to claim 5 or 6, **characterized in that** the near-surface regions facing towards the seat surfaces and/or the stop surfaces of the finished sealing elements (3, 3', 3 "), are free of fiber reinforcement preferably up to a depth that corresponds to at least two times to three times the size of the fiber diameter.

8. Compressor valve according to claim 7, **characterized in that** the fiber-free regions near the surface are composed of different materials compared to the rest of the sealing element, preferably with higher toughness and/or higher damping and/or fatigue cracking resistance.

9. Compressor valve according to one or more of claims 5 through 8, **characterized in that** a center layer disposed between the seat surface and the stop surface has less fiber reinforcement relative to the adjacent layers, preferably a reduced proportion of fiber volume compared to the adjacent layers.

10. Use of an element composed of plastic with embedded fiber reinforcement (11), which is composed of an essentially flat, non-woven fiber fabric (12) which has in the surface an at least large directionally independent fiber orientation as a highly dynamically impact stressed movable sealing element of an automatic compressor valve.

## Revendications

1. Soupape automatique de compresseur, comportant au moins un élément d'étanchéité mobile soumis à des impacts dynamiques élevés, en particulier une plaquette d'étanchéité (3), une bague d'étanchéité (3 ") et une lamelle d'étanchéité (3'), fabriqué dans une matière synthétique (14) avec renforcement par fibres incorporé (11), **caractérisé en ce que** le renforcement par fibres (11) est constitué d'au moins un mat de fibres (12) non tissé, essentiellement plat, avec orientation des fibres au moins largement indépendante de l'orientation à la surface.

2. Soupape de compresseur selon la revendication 1, **caractérisée en ce que** la longueur des fibres individuelles (13) dans le mat de fibres (12) est au moins majoritairement supérieure à 2 mm, de préférence au moins majoritairement supérieure à 4 mm.

3. Soupape de compresseur selon l'une des revendications 1 ou 2, **caractérisée en ce que** la proportion moyenne de fibres en volume dans l'élément d'étanchéité fini (3, 3', 3") se situe sur la plage de 5 à 30 %, de préférence de 10 à 20 %.

4. Soupape de compresseur selon l'une ou plusieurs des revendications 1 à 3, **caractérisée en ce que** le mat de fibres (12) est fait de fibres de verre, d'aramide, d'acier, de céramique ou de carbone, ou d'un mélange de celles-ci, de préférence de fibres de carbone, et **en ce que** la matière synthétique (14) qui les entoure est une matière synthétique duroplastique ou thermoplastique, en particulier de la résine époxyde, de la résine de bismaléinimide, de la résine polyuréthane, de la résine de silicone, du PEEK, du PA, du PPA, du PTFE, du PFA, du PPS, du PBT, du PET, du PI ou du PAI, de préférence du PEEK, du PA, du PFA ou du PPS.

5. Soupape de compresseur selon l'une ou plusieurs des revendications 1 à 4, **caractérisée en ce que**, dans l'élément d'étanchéité fini (3, 3', 3 "), pour tenir compte des exigences différentes localement, le renforcement par mat de fibres (11) et/ou la matière synthétique (14) environnante se présentent avec une répartition non homogène et/ou avec des propriétés localement différentes du matériau.

6. Soupape de compresseur selon la revendication 5, **caractérisée en ce que** la répartition non homogène résulte de la taille et/ou de la forme et/ou du matériau et/ou de l'agencement ou de la distribution dans l'espace d'un ou plusieurs mats de fibres (12).

7. Soupape de compresseur selon l'une des revendications 5 ou 6, **caractérisée en ce que** les zones superficielles tournées vers les surfaces d'appui et/ou d'impact de l'élément d'étanchéité fini (3, 3', 3") ne présentent pas de renforcement de fibres, de préférence jusqu'à une profondeur correspondant à au moins 2 à 3 fois le diamètre des fibres.

8. Soupape de compresseur selon la revendication 7, **caractérisée en ce que** les zones sans fibres proches de la surface sont faites dans des matériaux différents du reste de l'élément d'étanchéité, de préférence offrant une ténacité supérieure et/ou un amortissement supérieur et/ou une résistance supérieure à la fissuration de fatigue.

9. Soupape de compresseur selon l'une ou plusieurs des revendications 5 à 8, **caractérisée en ce qu'**une couche centrale située entre la surface d'appui et la surface d'impact présente par rapport aux couches adjacentes un moindre renforcement en fibres, de préférence une proportion de fibres en volume qui est réduite par rapport aux zones adjacentes.

10. Utilisation d'un élément en matière synthétique incorporant un renforcement par fibres (11) qui est fait d'un mat de fibres (12) non tissé, essentiellement plat, avec une orientation des fibres au moins largement indépendante de l'orientation à la surface, servant d'élément d'étanchéité mobile soumis à des impacts dynamiques élevés pour une soupape automatique de compresseur.
